# EUROPÄISCHE PATENTSCHRIFT

(11) **EP 0 486 427 B1**
(45) Veröffentlichungstag und Bekanntmachung des Hinweises auf die Patenterteilung: **14.09.1994**
(21) Anmeldenummer: 91810843.2
(22) Anmeldetag: 30.10.1991
(51) Int. Cl.: B60R 13/08, B32B 15/01

(54) **Entsorgbarer Hitzeschild**
Heat shield adapted for recycling
Bouclier thermique recyclable

(30) Priorität: 12.11.1990 CH 3583/90
(43) Veröffentlichungstag der Anmeldung: 20.05.1992
(73) Patentinhaber: RIETER AUTOMOTIVE (INTERNATIONAL) AG, CH-8700 Küsnacht (CH)
(72) Erfinder: Hielscher Peter, A-6832 Röthis (AT)
(74) Vertreter: Ritscher, Thomas, Dr.

(56) Entgegenhaltungen:
- EP-A- 0 396 076
- DE-A- 3 432 744
- DE-A- 3 821 468
- DE-U- 8 700 921
- DE-U- 8 812 026
- DE-U- 8 900 894
- US-A- 4 323 620

## Beschreibung

Die vorliegende Erfindung betrifft einen entsorgbaren Hitzeschild, insbesondere zur Isolation von Fahrzeugbodenteilen, mit einer formstabilen Trägerschicht, welche eine schallabsorbierende Wärmedämmschicht trägt und welche Wärmedämmschicht mindestens auf ihrer der Trägerschicht abgewandten Seite mit einem Schutzbelag versehen ist.

Solche Hitzeschilde werden u.a. in der Automobilindustrie verwendet, um beispielsweise das Bodenteil eines Fahrzeugs mindestens partiell zu verkleiden. Da bei der heute üblichen Verwendung von Katalysatoren die Temperaturen der Abgase und der Auspuffrohre stark erhöht sind, sind solche Verkleidungen heute weit verbreitet. Damit erhält die Entsorgung dieser Hitzeschilde eine besondere Bedeutung.

Bisher bekannte Hitzeschilde bestehen im wesentlichen aus einem dickeren Blechformteil mit hohem Wärmereflexionsvermögen, vorzugsweise aus Aluminium, auf welchem eine mit einer Schutzfolie versehene wärmeabsorbierende Isolierschicht aufgebracht ist. Die dabei verwendete Isolierschicht besteht in der Regel aus Keramik-, Stein- oder Glaswolle resp. solchen Schäumen. Ein solcher Hitzeschild ist beispielsweise in der DE-U-8700919.6 beschrieben.

Um diese Hitzeschilde auch akustisch wirksam zu machen, ist auch schon vorgeschlagen worden, die Trägerschicht teilweise zu perforieren, um eine akustische Ankopplung der Schallwellen an das isolierende Material der Wärmedämmschicht zuerzielen. Ein solcher akustisch wirksamer Hitzeschild ist beispielsweise in EP-A- 439432 (Stand der Technik nach Art. 54(3)EPÜ) beschrieben. Der in dieser Anmeldung offenbarte Hitzeschild beschreibt Wärmedämmschichten aus mineralischen oder keramischen, aus natürlichen oder anorganischen Materialien oder aus Mischungen davon, allenfalls auch mit geeigneten Zusätzen. Insbesondere werden heute für solche Hitzeschilde mineralische Schäume oder keramische Faservliese resp. Glasfasermatten verwendet.

Diese Hitzeschilde sind aber nur mühsam zu entsorgen, da die für deren Aufbau verwendeten Materialien je nach Fabrikant unterschiedlich gewählt sind und deshalb einzeln aufgetrennt und entsprechend den verschiedenen Materialien mühsam sortiert werden müssen.

Ein ausschliesslich aus Aluminium-Materialien gebauter Hitzeschild nach dem Oberbegriff des Anspruchs 1 ist aus DE-U- 8900894 bekannt. Durch die dort verwendete Alu-Folie als Dämmschicht besteht nur eine beschränkte Schallabsorption.

Es ist darum das Ziel der vorliegenden Erfindung, einen entsorgbaren Hitzeschild zu schaffen, der die Nachteile der bekannten Vorrichtungen nicht aufweist.

Erfindungsgemäss wird diese Aufgabe mit einem Hitzeschild mit den Merkmalen des Anspruchs 1 gelöst.

Entsorgungsfreundliche Metalle sind dem Fachmann auf dem Gebiet der Abprodukt-Verwertung hinreichend bekannt und kommen grundsätzlich für die Herstellung der erfindungsgemässen Hitzeschilde in Betracht.

Die Wärmedämmschicht besteht aus einem aluminiumhaltigen Gefüge, was heissen will, dass die Wärmedämmschicht auch aus wiederaufbereitetem Aluminium bestehen kann. Es versteht sich, dass für die Herstellung des erfindungsgemässen Hitzeschildes die Anforderungen an die Reinheit des wiederaufbereiteten Aluminiums nicht sehr hoch zu sein brauchen und in Grenzen auch Verunreinigungen enthalten kann.

Dabei kann die Wärmedämmschicht in bekannter Weise eine schaumartige oder faserige Struktur aufweisen.

Es versteht sich aber, dass die Wärmedämmschicht auch eine schnitzelige oder flockige Struktur aufweisen kann, wie sie von wiederverwerteten Materialien bekannt ist.

In der bevorzugten Ausführungsform besteht die Wärmedämmschicht aus einer handelsüblichen Aluminiumwolle, oder aus mehreren durch dünne Aluminiumfolien getrennte Lagen dieser Aluminiumwolle. Als besonders vorteilhaft für die Herstellung der erfindungsgemässen Hitzeschilde hat sich auch die Verwendung von Aluminiumgewirk erwiesen. Solche Gewirke sind handelsüblich und beispielsweise aus ca. 1 mm breiten Alustreifen oder -fäden gefertigt. Diese Gewirke weisen Maschen von ca. 5 mm Länge auf und werden als Meterware angeboten. Bei der Verwendung dieser Gewirke als Wärmedämmschicht werden diese mehrlagig zwischen Trägerschicht und Schutzbelag eingebracht.

Die solchermassen aufgebaute Mehrlagen-Wärmedämmschicht weist verbesserte schall- und wärmeisolierende Eigenschaften auf und wird den technischen Anforderungen entsprechend aufgebaut. Insbesondere wird diese Mehrlagen-Wärmedämmschicht dem Verwendungszweck entsprechend gesteppt, geprägt oder geklebt. Als besonders vorteilhaft erweisen sich auch Aerogele, welche beispielsweise in Form dünner Folien, als Granulat, Flocken, Pulver oder Schaum in der vorliegenden Mehrlagen-Wärmedämmschicht ihre Verwendung finden.

In einer Weiterbildung des erfindungsgemässen Hitzeschildes ist die Trägerschicht mindestens teilweise perforiert, um einen akustisch wirksamen Hitzeschild zu schaffen. In diesem Zusammenhang wird nochmals auf EP-A- 439432 hingewiesen, in welcher ein Hitzeschild mit feinporösen Folien offenbart wird.

Weitere bevorzugte Merkmale des erfindungsgemässen Schildes sind aus den Ansprüchen ersichtlich.

Nachfolgend soll die Erfindung anhand eines Ausführungsbeispiels und mit Hilfe der Figuren näher beschrieben werden. Es zeigen:
- Fig. 1: einen Querschnitt durch einen schematisch dargestellten Hitzeschild bekannter Art;
- Fig. 2a,b,c: je einen Querschnitt durch ein Endstück verschiedener Ausführungsformen eines erfindungsgemässen Hitzeschilds.

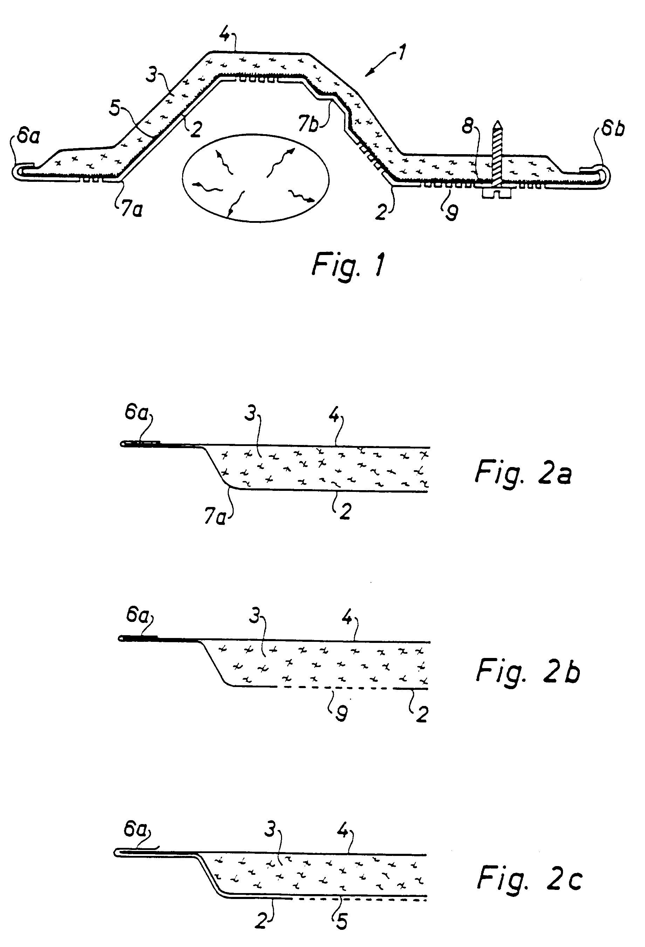

Der in Fig. 1 dargestellte Hitzeschild 1 besteht im wesentlichen aus einer perforierten Trägerschicht 2 mit einem guten Reflexionsvermögen für die Wärmestrahlung und vorzugsweise auch mit gutem Wärmeleitvermögen und einer schallabsorbierenden Wärmedämmschicht 3 aus mineralischen oder keramischen Materialien aus natürlichen oder anorganischen Fasern oder aus Mischungen dieser Substanzen mit Teflon oder anderen handelsüblichen Materialien, welche Wärmedämmschicht 3 mit einem Schutzbelag 4, 5 versehen ist.

Ueblicherweise wird für die Trägerschicht 2 ein Aluminiumblech mit einer Dicke zwischen 0,2 mm und 1,2 mm verwendet. Die Wärmedämmschicht kann beispielsweise aus einem mineralischen Schaum, einem keramischen Faservlies oder aus einer Glasfasermatte bestehen und eine Dicke von 5 mm bis 15 mm aufweisen. Als Schutzbelag kann sowohl ein Aluminiumblech oder eine dünne Aluminiumfolie 4 als auch ein spritzmetallisierter Belag 5 dienen. Vorzugsweise weist die Folie oder der spritzmetallisierte Belag an der der perforierten Trägerschicht zugewandten Seite eine Dicke von weniger als 30 µm auf, während der Schutzbelag auf der der perforierten Trägerschicht abgewandten Seite eine Dicke von 0,05 mm bis 1,2 mm aufweisen kann.

Bei diesen handelsüblichen Hitzeschilden sind die einzelnen Schichten, Beläge oder Folien mindestens teilweise miteinander verklebt, geheftet, verschweisst, oder in der Bördelkante eingeklemmt.

Die Trägerschicht 2 braucht nicht in allen Bereichen perforiert zu sein. Insbesondere sind die Randbereiche 6a, 6b welche gebördelt sind, frei von Perforationen 9. Ebenso sind die kantigen Verformungszonen 7, wie beispielsweise Knickstellen 7a und Sicken 7b, perforationsfrei ausgebildet. Wesentliche perforationsfreie Teilbereiche sind durch die Befestigungszonen 8 vorbestimmt.

Derart ausgestaltete Hitzeschilde bestehen somit aus einer Vielzahl von verschiedensten Materialien, beispielsweise Aluminium für die Trägerschicht, Keramikwolle für die Isolationsscnicht, hitzebeständige Kleber für die Verbindung dieser Schichten und verzinkte Heftklammern für die gehefteten Befestigungen.

Damit erweisen sich die herkömmlichen Hitzeschilde als schlecht entsorgbar, insbesondere weil diese erst mit entsprechenden Verfahren aufgetrennt, sortiert und gereinigt werden müssen, bevor deren Material wiederverwertet werden kann.

Der in Fig. 2a dargestellte Querschnitt eines erfindungsgemässen Hitzeschilds zeigt diesen in seiner einfachsten Ausführungsform mit einer formstabilen Trägerschicht 2, welche eine schallabsorbierende Wärmedämmschicht 3 trägt und welche Wärmedämmschicht 3 auf ihrer der Trägerschicht 2 abgewandten Seite mit einem Schutzbelag 4 versehen ist, wobei diese verschiedenen Schichten resp. Beläge des Hitzeschildes aus einem Leichtmetall gefertigt sind. Insbesondere wird in einer bevorzugten Ausführungsform als formstabile Trägerschicht 2 ein 0,3 bis 1,5 mm dickes Aluminiumblech verwendet. Die Wärmedämmschicht 3 besteht bei dieser Ausführungsform aus einer Aluminiumwolle mit einem Raumgewicht von 30 bis 100 kg/m³. Als oberer Schutzbelag dient eine 0,05 bis 0,2 mm dicke Aluminiumfolie.

Eine für die Herstellung der erfindungsgemässen Hitzeschilde besonders geeignete Wärmedämmschicht besteht aus einem Aluminiumgewirk. Diese metallische Maschenware ist in allen drei Dimensionen problemlos verformbar und kann den lokalen Erfordernissen gemäss dicht gepackt oder locker ausgelegt werden.

Fig. 2b zeigt eine akustisch wirksame Ausführungsform des erfindungsgemässen Hitzeschildes, welcher sich gegenüber der obigen Ausführungsform durch eine mindestens partiell perforierte Trägerschicht 2 unterscheidet. Es versteht sich, dass die Grösse und Verteilung dieser Perforationen der Lärmquelle entsprechend optimiert sind.

In einer bevorzugten Ausführungsform, wie sie in Fig. 2c dargestellt wird, liegt zwischen der Wärmedämmschicht 3 und der partiell perforierten Trägerschicht eine als Folienabsorber wirkende 0,01 bis 0,02 mm dünne Aluminiumfolie.

Einfacherweise kann diese Folie auch durch einen spritzmetallisierten Belag oder eine durch Verschmelzen erzeugte feste und poröse Haut ersetzt sein.

Wesentlich für die akustische Wirksamkeit des vorliegenden Hitzeschildes ist die Porosität der einzelnen Schichten. In einer besonderen Weiterbildung des erfindungsgemässen Hitzeschildes werden Aluminiumfolien verwendet, deren Poren insbesondere mit einer Nadelwalze eingeformt werden. Die derart erzeugten Poren weisen kronenartige Ausbrechungen resp. Perforationsprotrusionen auf, welche sicherstellen, dass die mit diesen Perforationsprotrusionen ausgebildeten Folien nicht flach auf der benachbarten Folie oder Schicht aufliegen, sondern voneinander beabstandet sind und damit die akustische Wirksamkeit des erfindungsgemässen Hitzeschildes verbessert wird. Es versteht sich, dass die Geometrie und Dimensionierung dieser Perforationsprotrusionen vom Fachmann in einfacher Weise optimiert werden können. Insbesondere werden solche Folien mit ein- oder beidseitig ausgebildeten Perforationsprotrusionen als Zwischenlagen in der mehrschichtig aufgebauten Wärmedämmschicht verwendet und können in dieser einzeln oder als Ensemble vorliegen.

In jedem Fall sollte der Fachmann aus den ihm zur Verfügung stehenden Materialien, d.h. Leichtmetallen oder deren Lagierungen, ein solches auswählen, welches u.a. nicht toxisch ist, korrosionsbeständig ist, gute Wärmereflexionseigenschaften hat und leicht formbar ist. Insbesondere ist für Hitzeschilde, wie sie in der Automobilindustrie verwendet werden, in der Regel ein Material mit einem Schmelzpunkt oberhalb 600°C zu wählen. Dies ist erforderlich um auch unter ungünstigen Einsatzbedingungen ausreichende Sicherheit zu bieten.

Aus akustischen Gründen werden insbesondere Gefüge gewählt, welche offenporig sind und ein hohes Elastizitätsmodul resp. einen hohen Verlustfaktor aufweisen. Insbesondere ist deren Absorptionswirksamkeit, d.h. deren Porosität und Elastizität im Bereich von 80 dB, d.h. zwischen 70 dB und 90 dB optimiert.

Als für diesen Zweck besonders geeignete Materialzusätze erweisen sich in diesem Zusammenhang Aerogele. Aerogele sind extrem leichte und poröse Werkstoffe mit ausserordentlich guten wärme- und schalldämmenden Eigenschaften und sind dem Fachmann hinlänglich bekannt, beispielsweise aus dem Artikel "Aerogels - a Fascinating Class of High-Performance Porous Solids" in Aerogels Proc. First Int. Symp. 1985, Würzburg.

Insbesondere können diese Aerogele in Folienform zwischen den einzelnen Lagen der Wärmedämmschicht angebracht werden oder als auf Aluminiumwolle oder Aluminiumfalie aufgebrachte Verbindungen in der vorliegenden Wärmedämmschicht verwendet werden. Aerogele sind für den erfindungsgemässen Hitzescnild aber auch in Hartschaum-, Flocken-, Pulver- oder Granulatform verwendbar. Dazu werden die entsprechenden Lagen der Wärmedämmschicht kissenartig verformt.

Vorzugsweise wird die gesamte Wärmedämmschicht zur Verbesserung der Langzeit-Formstabilität gesteppt. Ebenso geeignet erweisen sich auch Prägungen, Falzungen oder Klebungen, welche der Wärmedämmschicht ein steppdeckenartiges Aussehen verleihen. Wesentlich dabei ist die Bildung von kissenförmigen Bereichen, welche den technischen Anforderungen gemäss dimensioniert sind.

Als Wärmedämmschicht kommen alle Gefüge mit porösen Strukturen in Frage, wie beispielsweise Vliese, Wolle, Splitfasern, Gewebe, orientierte oder ungeordnete Gespinste, mehrschichtige oder einfache Beläge, Schnitzel, Streifen, Spiralen, Flocken, Schäume, Granulate oder Konglomerate.

Es versteht sich, dass für die Verbindung der einzelnen Schichten rezirkulationsfähige Haftstoffe verwendet werden, d.h. Haftstoffe, welche den Bestimmungen über entsorgbare Abprodukte genügen.

Insbesondere werden zur Montagehilfe mit Heissklebern beschichtete Aluminiumfolien verwendet. Damit kann die kontinuierlich hergestellte Wärmedämmschicht resp. Mehrlagen-Wärmedämmschicht in einfacher Weise steppdeckenartig verklebt werden und in eine für die Herstellung der Hitzeschilde geeignete Form gebracht werden.

In der erprobten Ausführungsform ist die Trägerschicht 2 gebördelt, um die verschiedenen Schichten bzw. Beläge oder Folien zusammenzuhalten. Diese Bördelung erübrigt andere Befestigungsmittel, wie beispielsweise Nieten, Heftklammern oder Schweissnähte, welche im wesentlichen wieder aus anderen Materialien bestehen.

Die Vorteile des hier beschriebenen Hitzeschildes sind offensichtlich. Insbesondere werden lokale Temperaturunterschiede rasch ausgeglichen, womit eine lokale Zerstörung der zu schützenden Teile verhindert wird. Im weiteren weist ein derart ausgebildeter Hitzeschild eine Hitzeresistenz von bis zu 660°C auf, widersteht chemischen Belastungen, wie sie bei Fahrzeugen üblich sind, d.h. ist resistent gegen Salz, Oel, Teerverschmutzungen, Fett oder Säuren, und weist ein niederes Gewicht auf. Die bevorzugte Ausbildung mit der Bördelung erlaubt eine kostengünstige Herstellung und eine einfache und sichere Montage.

Weitere Ausbildungen des erfindungsgemässen Hitzeschildes liegen im gewöhnlichen technischen Handeln des Fachmanns. Insbesondere können weitere Schichten zwischen Trägerschicht und Wärmedämmschicht oder zwischen Wärmedämmschicht und oberem Schutzbelag 4 vorgesehen sein. Die Wärmedämmschicht kann ein- oder mehrschichtig aufgebaut sein. Insbesondere sind alle denkbaren Kombinationen der oben beschriebenen Einzelschichten als Aufbau für den erfindungsgemässen Hitzeschild geeignet, beispielsweise Alu-Folie/Alu-Wolle/Alu-Folie/Alu-Folie/Alu-Wolle, oder Alu-Folie/Alu-Gewirk/Alu-Wolle/Alu-Folie, oder Alu-Folie/Alu-Gewirk/Aerogel/Alu-Folie, oder Alu-Folie/Alu-Folie/Alu-Folie/Alu-Folie/Alu-Folie, oder Alu-Folie/Aerogel/Alu-Folie usw.

Die oben beschriebenen schallabsorbierenden Hitzeschilde können an Fahrzeugen, insbesondere Motorfahrzeugen, ebenso gut verwendet werden, wie an Bau- oder Industriemaschinen, und an beliebigen Unterteilen, bspw. am Boden-, Front- oder Dachblech, montiert werden.

Insbesondere können alle obigen Ausführungsformen in Kombination mit herkömmlichen Schallschutzteilen verwendet werden. So lässt sich der erfindungsgemässe Hitzeschild - besonders in seiner Ausführungsform mit dem Aluminiumgewirk - problemlos in entsprechend ausgesparte Schallisolationsteile einsetzen oder auf diesen aufsetzen. Geeignete Verbindungsmittel, wie Klips, Kleber etc., sind dem Fachmann hinlänglich bekannt und nicht Gegenstand der vorliegenden Erfindung. Es versteht sich auch, dass der erfindungsgemässe Hitzeschild dank seiner Eigenstabilität und Entsorgungsfreundlichkeit herkömmliche Schallschutzteile vollständig ersetzen kann. Besonders geeignet dafür ist der Motorraumbereich, insbesondere der Stirnwandbereich. Für den Fachmann selbstverständlich ist auch dessen Verwendung als reines Schallschutzteil.

## Patentansprüche

1. Entsorgbarer Hitzeschild zur Isolation von Fahrzeugteilen, mit einer formstabilen Trägerschicht, welche eine schallabsorbierende Wärmedämmschicht trägt und welche Wärmedämmschicht mindestens auf ihrer der Trägerschicht abgewandten Seite mit einem Schutzbelag versehen ist, wobei die formstabile Trägerschicht, die schallabsorbierende Wärmedämmschicht und der Schutzbelag aus Aluminium-Materialien gefertigt sind, so dass der gesamte Hitzeschild ausschliesslich aus Aluminium-Teilen besteht, dadurch gekennzeichnet, dass die schallabsorbierende Wärmedämmschicht aus einem ein- oder mehrschichtig aufgebautem Gefüge mit offenporiger Struktur besteht, welche offenporige Struktur zur Erhöhung der akustischen Absorbtionswirksamkeit aus locker miteinander verbundenen Gefügeteilen besteht.

2. Hitzeschild nach Anspruch 1, dadurch gekennzeichnet, dass die Wärmedämmschicht Aluminiumwolle umfasst.

3. Hitzeschild nach Anspruch 1, dadurch gekennzeichnet, dass die Wärmedämmschicht Aluminiumgewirk umfasst.

4. Hitzeschild nach Anspruch 1, dadurch gekennzeichnet, dass die Wärmedämmschicht aluminiumhaltiges Aerogel umfasst.

5. Hitzeschild nach Anspruch 1, dadurch gekennzeichnet, dass die Wärmedämmschicht mindestens eine mit Perforationsprotrusionen versehene Aluminiumfolie aufweist.

6. Hitzeschild nach Anspruch 1, dadurch gekennzeichnet, dass die Wärmedämmschicht steppdeckenartig verformt ist.

7. Hitzeschild nach Anspruch 2, dadurch gekennzeichnet, dass die Trägerschicht aus einem 0,3 bis 1,5 mm dicken Aluminiumblech besteht.

8. Hitzeschild nach Ansprch 5, dadurch gekennzeichnet, dass das Aluminiumblech nur partiell perforiert ist.

9. Hitzeschild nach Anspruch 6, dadurch gekennzeichnet, dass zwischen dem perforierten Aluminiumblech und der Wärmedämmschicht eine dünne Schutzschicht aus einer 0,01 bis 0,02 mm dicken Aluminiumfolie liegt.

10. Hitzeschild nach Anspruch 5, dadurch gekennzeichnet, dass der Schutzbelag eine 0,05 bis 0,2 mm dicke Aluminiumfolie ist.

11. Verwendung eines entsorgbaren Hitzeschildes gemäss Anspruch 1 zur Isolation von Fahrzeugteilen, wie Fahrzeugbodenteilen oder Fahrzeugstirnteilen.

## Claims

1. Recyclable heat shield for the insulation of vehicle parts, with a dimensionally-stable support layer which supports a sound-absorbing thermal insulation layer, said thermal insulation layer being provided with a protective coating, at least on its side facing away from the support layer, whereby the dimensionally-stable support layer, the sound-absorbing thermal insulation layer and the protective coating are manufactured from aluminium materials, so that the entire heat shield consists exclusively of aluminium parts, characterised in that the sound-absorbing thermal insulation layer consists of a single-layer or multi-layer construction with open-cell structure, said open-cell structure consisting of loosely-interlinked structural elements for increasing the effectiveness of the acoustic absorption.

2. Heat shield according to Claim 1, characterised in that the thermal insulation layer contains aluminium wool.

3. Heat shield according to Claim 1, characterised in that the thermal insulation layer contains aluminium mesh.

4. Heat shield according to Claim 1, characterised in that the thermal insulation layer contains aluminised Aerogel.

5. Heat shield according to Claim 1, characterised in that the thermal insulation layer has at least one aluminium foil provided with perforated protrusions.

6. Heat shield according to Claim 1, characterised in that the thermal insulation layer is formed like a quilt.

7. Heat shield according to Claim 2, characterised in that the support layer consists of an aluminium sheet of a thickness between 0.3 and 1. 5 mm.

8. Heat shield according to Claim 5, characterised in that the aluminium sheet is only partially perforated.

9. Heat shield according to Claim 6, characterised in that a thin protective layer of aluminium foil of a thickness between 0.01 and 0.02 mm is arranged between the perforated aluminium sheet and the thermal insulation layer.

10. Heat shield according to Claim 5, characterised in that the protective coating is an aluminium foil of a thickness between 0.05 and 0.2 mm.

11. The use of a recyclable heat shield according to Claim 1 for the insulation of vehicle parts, such as vehicle floor parts or vehicle front parts.

## Revendications

1. Bouclier thermique recyclable destiné à l'isolation de pièces de véhicules, avec une couche support lui conférant une forme stable, qui porte une couche d'isolation thermique absorbant le bruit, laquelle couche d'isolation thermique étant pourvue d'un revêtement de protection, disposé sur la face opposée à la couche support, bouclier dans lequel la couche support conférant la forme stable, la couche d'isolation thermique absorbant le bruit et le revêtement de protection sont réalisés en des matériaux à base d'aluminium, et l'ensemble du bouclier thermique est constitué exclusivement de pièces en aluminium, caractérisé en ce que la couche d'isolation thermique insonorisante est constituée d'une texture présentant une structure à pores ouverts, réalisée en une ou plusieurs couches, laquelle structure à pores ouverts étant constituée d'éléments de texture reliés entre-eux de manière lâche, afin d'augmenter l'efficacité de l'absorption acoustique.

2. Bouclier tnermique selon la revendication 1, caractérisé en ce que la couche d'isolation thermique comprend de la laine d'aluminium.

3. Bouclier thermique selon la revendication 1, caractérisé en ce que la couche d'isolation thermique comprend un tricot d'aluminium.

4. Bouclier thermique selon la revendication 1, caractérisé en ce que la couche d'isolation thermique comprend un aérogel comprenant de l'aluminium.

5. Bouclier thermique selon la revendication 1, caractérisé en ce que la couche d'isolation thermique présente au moins une feuille d'aluminium avec des protubérances disposées autour des perforations.

6. Bouclier thermique selon la revendication 1, caractérisé en ce que la couche d'isolation thermique est matelassée.

7. Bouclier thermique selon la revendication 2, caractérisé en ce que la couche support est constituée d'une tôle d'aluminium de 0,3 à 1,5 mm d'épaisseur.

8. Bouclier thermique selon la revendication 7, caractérisé en ce que la tôle d'aluminium n'est que partiellement perforée.

9. Bouclier thermique selon la revendication 7 ou 8, caractérisé en ce qu'une fine couche de protection réalisée en une feuille d'aluminium de 0,01 à 0,02 mm d'épaisseur est disposée entre la tôle d'aluminium perforée et la couche d'isolation thermique.

10. Bouclier thermique selon la revendication 5, caractérisé en ce que le revêtement de protection est une feuille d'aluminium de 0,05 à 0,2 mm d'épaisseur.

11. Utilisation d'un bouclier thermique recyclable selon la revendication 1 pour l'isolation de pièces de véhicules, comme des pièces de plancher de véhicule ou des pièces de la partie frontale de véhicules.
